# EUROPEAN PATENT SPECIFICATION

(11) **EP 1 740 369 B1**
(45) Date of publication and mention of the grant of the patent: **19.12.2007**
(21) Application number: 04730625.3
(22) Date of filing: 30.04.2004
(51) Int. Cl.: B29D 30/20

(54) **METHOD AND APPARATUS FOR MANUFACTURING A RUN-FLAT TYRE FOR VEHICLE WHEELS**
VERFAHREN UND VORRICHTUNG ZUR HERSTELLUNG EINES RUN-FLAT-REIFENS FÜR FAHRZEUGRÄDER
PROCEDE DE FABRICATION D'UN PNEU A FLANCS RENFORCES POUR ROUE DE VEHICULE

(43) Date of publication of application: 10.01.2007
(73) Proprietor: PIRELLI TYRE S.p.A., 20126 Milano (IT)
(72) Inventor: LACAGNINA, Claudio, 20126 Milano (IT)
(74) Representative: Tansini, Elio Fabrizio
(86) International application number: PCT/IT2004/000237
(87) International publication number: WO 2005/105419

(56) References cited:
- EP-A- 1 201 414
- EP-A- 1 358 998
- US-B1- 6 488 797
- DATABASE WPI Week 200438 Derwent Publications Ltd., London, GB; AN 2004-403703 XP002310930 -& JP 2004 122658 A (BRIDGESTONE CORP) 22 April 2004 (2004-04-22)

## Description

The present invention relates to a method of manufacturing a run-flat tyre for vehicle wheels.

The invention also relates to an apparatus for manufacturing a run-flat tyre for vehicle wheels.

A tyre for vehicle wheels generally comprises a carcass structure including at least one carcass ply having respectively opposite end flaps looped back around annular anchoring structures, each usually formed of a substantially circumferential annular insert to which at least one filling insert is applied at a radially external position.

Associated with the carcass structure is a belt structure comprising one or more belt layers disposed in radially superposed relationship with respect to each other and to the carcass ply and having textile or metallic reinforcing cords in a crossed orientation and/or substantially parallel to the circumferential extension direction of the tyre. Applied to the belt structure, at a radially external position, is a tread band made of elastomer material, like other semifinished products constituting the tyre.

It is to be herein pointed out, to the aims of the present description, that by the term "elastomer material" it is intended a composition comprising at least one elastomer polymer and at least one reinforcing filler. Preferably, this composition further comprises additives such as cross-linking agents and/or plasticizers, for example. Due to the presence of cross-linking agents, this material can be cross-linked through heating so as to form the final article of manufacture.

Also applied to the side surfaces of the carcass structure, each extending from one of the side edges of the tread band until close to the respective annular anchoring structure to the beads, are respective sidewalls of elastomer material that, depending on the different embodiments, can have respective radially external end edges that are superposed on the side edges of the tread band to form a design scheme of the type usually called "overlying sidewalls", or interposed between the carcass structure and the side edges of the tread band itself, in accordance with a design scheme of the type referred to as "underlying sidewalls".

In most of the known processes for tyre manufacture, the carcass structure and belt structure are provided to be made separately of each other in respective work stations, to be mutually assembled at a later time.

More particularly, manufacture of the carcass structure first contemplates formation of a so-called carcass sleeve which is substantially cylindrical. To this aim, the carcass ply or plies are laid on a first drum usually identified as "building or assembling drum" on which at least one airtight layer of butyl-based elastomer material may be previously disposed, which layer usually referred to as "liner" has a high imperviousness to air. The annular anchoring structures to the beads are fitted or formed on the opposite end flaps of the carcass ply or plies that in turn are turned up around the annular structures themselves so as to enclose them in a sort of loop.

Simultaneously, on a second drum or auxiliary drum, an outer sleeve is made which comprises the belt layers laid down in radially superposed relationship with each other, and optionally the tread band applied to the belt layers at a radially external position. The outer sleeve is then picked up from the auxiliary drum to be coupled with the carcass sleeve. For the purpose, the outer sleeve is disposed in coaxial relationship around the carcass sleeve, and afterwards the carcass ply or plies are shaped into a toroidal conformation by axially moving the beads close to each other and simultaneously admitting fluid under pressure into the carcass sleeve, so as to determine application of the outer sleeve to the carcass structure of the tyre at a radially external position thereof. Assembling of the carcass sleeve with the outer sleeve can be carried out on the same drum as used for building the carcass sleeve, in which case reference is made to a "unistage building process". A building process of this type is described in document US 3,990,931, for example.

Also known are building processes of the so-called "two-stage" type in which, as described in document EP 0 613 767 for example, assembling between the carcass structure and belt structure is carried out on a so-called shaping drum onto which the carcass sleeve picked up from the building drum and, subsequently, the outer sleeve picked up from the auxiliary drum are transferred.

In the manufacture of run-flat tyres, i.e. tyres such constructed as to enable running under acceptable safety conditions even when the tyre is partly or fully deflated, the carcass structure is required to be integrated with additional annular reinforcing inserts the task of which is substantially that of supporting the load bearing on the wheel, when, following a puncture for example, the inflating pressure of the tyre is partly or fully lacking.

Document US 6,488,797 discloses a run-flat tyre provided with annular reinforcing inserts of elastomer material of such a length that they substantially extend from the shoulder region of the tyre until close to the bead region.

In tyre manufacture, these annular reinforcing inserts are circumferentially disposed spaced apart a suitable axial distance from each other on the building drum before or after application of the liner, and before application of the carcass ply or plies.

Document EP 1 358 998 discloses a production method according to which different tyre components, among which the annular reinforcing inserts for a run-flat tyre, are formed through spiral winding of a strip of raw elastomer material on an outer circumferential surface of the building drum.

In accordance with the present invention, the Applicant however realised that important improvements could be made to the production methods of the known art, in terms both of productivity and quality of the obtained product.

In this connection, it has been noticed that the operations to be carried out at a primary building drum for making the carcass structure need a higher cycle-time than required for the operations carried out on the auxiliary drum to make the belt structure and possibly the tread band. In more detail, the Applicant could ascertain that one of the causes leading to an increase in the overall cycle time, i.e. the time required for completing the building cycle of the tyre, resides in the necessity to make the annular reinforcing inserts on the same drum designed to make the carcass structure.

The Applicant also realised that this situation is particularly disadvantageous when said annular reinforcing inserts are made through spiralling of a continuous elongated element, since a longer time is required as compared with the necessary time when said inserts are preformed in the form of a strip.

Document JP 2004 122658 - A discloses a method and an apparatus whereby annular reinforcing inserts carried by a service drum are applied to the inner surface of a cylindrical carcass.

In accordance with the present invention, thus the Applicant realised that considerable advantages particularly in terms of productivity could be achieved if the annular reinforcing inserts were made on a service drum for example, separately of the primary drum on which other operations aiming at preparing the carcass structure were executed. In fact, in this way both the building time on the primary drum and the waiting time on the auxiliary drum, of the tyre components assembled therein, were reduced.

In more detail, in a first aspect, the present invention relates to a method of manufacturing a run-flat tyre for vehicle wheels, comprising the steps according to claim 1, namely: preparing a carcass structure on a primary drum, which carcass structure comprises at least one pair of annular reinforcing inserts of elastomer material axially spaced apart from each other, at least one carcass ply circumferentially associated with said annular reinforcing inserts and at least one pair of annular anchoring structures associated with said at least one carcass ply; shaping the carcass structure into a toroidal configuration; associating a belt structure comprising at least one belt layer, with the carcass structure; wherein preparation of the carcass structure comprises the steps of: forming the annular reinforcing inserts on at least one service drum; transferring the annular reinforcing inserts from the service drum to the primary drum, before application of the carcass ply.

Preferred embodiments of the method according to the invention are defined in the dependent claims 2 to 22.

In a preferred embodiment of the method of the invention, each reinforcing insert is formed through winding of at least one continuous elongated element of elastomer material to form coils disposed consecutively close to each other on the service drum. Thus circumferential discontinuities and other faults due to end-to-end junctions of the inserts obtained from sections of an extruded strip are eliminated.

Also achieved is the possibility of obtaining reinforcing inserts of any shape and size without being obliged to control production of the semi-finished products.

It may be also provided that the annular reinforcing inserts be formed at mutually close positions on the service drum to be then moved apart following the step of carrying out a mutual axial movement of same, so as to allow adaptation of the distance between the annular reinforcing inserts depending on the construction features of the tyre being processed, which will enable use of a single service drum having a reduced axial bulkiness.

In accordance with a further preferential mode of putting into practice the method of the invention which enables operation on the primary drum engaged between a pair of support elements projecting in coaxial relationship therefrom, transfer of the annular reinforcing inserts onto the primary drum comprises the steps of: engaging the annular reinforcing inserts with at least one transfer device; disposing the annular reinforcing inserts around at least one of said support elements before engaging the primary drum with the support elements themselves; axially moving the transfer device to position the annular inserts around the primary drum in engagement with the support elements; and axially moving the transfer device to disengage it from the primary drum carrying the annular reinforcing inserts and position it around one of the support elements.

In another aspect, the present invention relates to an apparatus for manufacturing tyres for vehicle wheels as recited in claim 23, the apparatus comprising: a primary drum set to support a carcass structure comprising at least one pair of annular reinforcing inserts of elastomer material axially spaced apart from each other, at least one carcass ply circumferentially associated with said annular reinforcing inserts and at least one pair of annular anchoring structures associated with said at least one carcass ply; shaping devices to give the carcass structure a toroidal configuration; further comprising at least one service drum; devices designed to form the annular reinforcing inserts on the service drum; and transfer devices to carry the annular reinforcing inserts from the service drum to the primary drum.

Preferred embodiments of the apparatus according to the invention are defined in the dependent claims 24 to 41.

The devices designed to form the annular reinforcing inserts preferably comprise at least one extrusion die or other appropriate unit to feed a continuous elongated element of elastomer material in the form of coils disposed consecutively in side by side relationship.

In accordance with a preferred embodiment allowing adaptation of the distance between the annular reinforcing inserts depending on the geometric features of the primary drum, and use of a single service drum having a reduced axial bulkiness, the annular transfer member comprises a first and a second portion disposed axially close to each other, movable close to and away from each other and each of them carrying respective grip members to engage one of the annular reinforcing inserts.

Further features and advantages will become more apparent from the detailed description of a preferred but not exclusive embodiment of a method and an apparatus for manufacturing tyres for vehicle wheels in accordance with the present invention.

This description will be set out hereinafter with reference to the accompanying drawings, given by way of non-limiting example, in which:
- Fig. 1 diagrammatically shows an apparatus for manufacturing tyres in accordance with the present invention;
- Figs. 2 to 7 diagrammatically show a movement sequence of a transfer device for the reinforcing inserts used in the apparatus of the invention;
- Fig. 8 is a diagrammatic side view partly in section of the transfer device of the annular reinforcing inserts;
- Fig. 9 is a diagrammatic cross-sectional view of a tyre obtainable in accordance with the present invention.

With reference to the drawings, an apparatus for manufacturing a run-flat tyre for vehicle wheels set to put into practice a method in accordance with the present invention has been generally identified with reference numeral 1.

The invention aims at manufacturing run-flat tyres of the type generally denoted at 2 in Fig. 9, essentially comprising a carcass structure 3 of substantially toroidal conformation, a belt structure 4 circumferentially extending around a carcass structure 3, a tread band 5 applied to the belt structure 4 at a radially external position and a pair of sidewalls 6 laterally applied on opposite sides to the carcass structure 3 and each extending from a side edge 5a of the tread band 5 until close to a so-called bead 7a located along a respective radially inner edge of tyre 2.

The carcass structure 3 comprises a pair of annular anchoring structures 7 integrated into the beads 7a, each made up, for example, of a substantially circumferential annular insert 8 usually called "bead core", carrying an elastomer filler 9 at a radially external position. Turned up around each of the annular anchoring structures are the end flaps 10a of one or more carcass plies 10 comprising textile or metallic cords extending transversely of the circumferential extension of tyre 2, possibly according to a predetermined inclination, from one of the annular anchoring structures 7 to the other.

Also provided are annular reinforcing inserts 11 of elastomer material, usually called "sidewall inserts", applied to the inside of the carcass ply 10 for supporting the loads transmitted between the belt structure 4 and the annular anchoring structures 7 when tyre 2, following a puncture for example, is urged to run under conditions of partial or full deflation.

Each annular reinforcing insert 11 has a substantially lenticular cross-section outline gradually tapering towards a radially outer edge 11a of same disposed close to a corresponding side edge 4a of the belt structure 4 and a radially inner edge 11b placed on the opposite side, close to the bead 7a.

Identifiable on each annular reinforcing insert 11, close to the maximum-chord point, i.e. in the region of maximum axial dimension of tyre 2, is a region of maximum thickness 11c.

The carcass ply 10 can be internally coated with a so-called "liner" 12, consisting of at least one butyl-based elastomer layer for example, having a satisfactory imperviousness to air. Liner 12 can cover the whole extension of the inner surfaces of the carcass structure 3, from one of the beads 7a to the other. Alternatively, the liner can have an interrupted extension in the regions concerned with the reinforcing inserts 11, with end flaps 12a joined to the radially outer edges 11a of the annular reinforcing inserts 11.

The belt structure 4 can in turn comprise one or more belt layers 13a, 13b including metallic or textile cords that are suitably inclined to the circumferential extension of tyre 2, in respectively crossed orientations between one belt layer and the other, as well as a possible outer belting layer (not shown) generally called 0-degree layer, comprising one or more cords circumferentially wound up to form coils disposed axially in side by side relationship around the belt layers 13a, 13b. Each of the sidewalls 6 and the tread band 5 essentially comprises at least one layer of elastomer material of appropriate thickness. Also associated with the tread band 5 can be a so-called under-layer (not shown), of elastomer material having appropriate composition and physico-chemical features and acting as an interface between the true tread band 5 and the underlying belt structure 4.

Several different components of the carcass structure 3 and the belt structure 4, such as in particular the annular anchoring structures 7, carcass plies 10, belt layers 13a, 13b and further possible reinforcing elements designed to constitute the above mentioned outer belting layer, are supplied to apparatus 1 in the form of semi-finished products, preferably manufactured during preceding working steps, to be then suitably assembled together.

Apparatus 1 comprises a primary drum 14, on which assembling of at least part of the components designed to form the carcass structure 3 of tyre 2 is carried out. The primary drum 14 can be indifferently formed of a first-stage building drum when, as in the example shown, a two-stage manufacturing process is carried out, or a building drum of the type usually called "unistage" when the manufacturing process is wished to be carried out in a single stage.

The primary drum 14, not described in detail as it can be made in any convenient manner, can be formed of expandable sectors. In the described embodiment, the primary drum 14 further has two support elements 14a disposed in coaxial relationship on opposite sides, to be engaged by a movement member 15 for sequential transfer of the drum itself to at least one building station 16. The building station 16 is equipped with respective mandrels 16a or equivalent devices that operatively engage the primary drum 14 at the support elements 14a to conveniently support it and, in case of need, drive it in rotation during application of the components of the carcass structure 3.

In an alternative embodiment not shown in the figures, the primary drum 14 can be supported in cantilevered fashion in the building station 16 provided with a respective mandrel to conveniently bear it and, in case of need, drive it in rotation during application of the components of the carcass structure 3.

In more detail, the primary drum 14 lends itself to first receive, as described in more detail in the following, the annular reinforcing inserts 11 and the optional liner 12 that can be applied before or after application of the reinforcing inserts 11. Then the carcass ply 10 is wound on the primary drum 14 so as to form a cylindrical sleeve on the opposite end flaps of which the annular anchoring structures 7 are subsequently fitted. Turning up of the end flaps 10a of the carcass ply 10 can then be carried out around the annular anchoring structures 7. Application of the sidewalls 6 may be also provided on the primary drum 14 and it can be carried out before or after application of the carcass ply 10, depending on the construction process.

The carcass structure 3, made in the form of a cylindrical sleeve, is then picked up from the primary drum 14 by a first transfer member 17 carrying out engagement of same on shaping devices 18. These shaping devices comprise a shaping drum 18, or second-stage drum axially divided into two halves 18a that can be moved close to each other and set to engage the carcass structure 3, each at one of the annular anchoring structures 7.

Apparatus 1 further comprises an auxiliary drum 19 preferably aligned in coaxial relationship with the shaping drum 18 on which the components of the belt structure 4 are assembled in a preestablished sequence.

In more detail, the belt structure 4 is made by winding the belt layers 13a, 13b on the auxiliary drum 19, said layers being each formed of a semifinished product in the form of a strip coming from suitable feeding units not shown as they can be implemented in known manner.

Also interlocked with the auxiliary drum 19 can be a further feeding unit set to supply a strip section of elastomer material of appropriate cross-section, that is applied at a radially external position to the belt structure 4 to form the tread band 5.

Alternatively, the tread band 5 can be provided to be made through spiralling of at least one, preferably continuous, elongated element of elastomer material, i.e. by winding said elongated element into substantially circumferential coils, said elongated element being supplied from an extrusion die or other suitable feeding unit, for example. Winding takes place at a radially external position to the belt structure 4 assembled on the auxiliary drum 19 maintained in rotation, while a controlled axial movement of the feeding unit and/or of the auxiliary drum itself causes distribution of the coils in a manner adapted to give the tread band 5 the desired final shape.

A second transfer member 20 movable between the auxiliary drum 19 and the shaping drum 18 along the direction of mutual alignment of the latter, transfers the belt structure 4 together with the tread band 5 possibly applied thereto, onto the carcass structure 3 in the form of a cylindrical sleeve supported by the shaping drum 18.

In a manner known by itself, when the belt structure 4 is in a centred position with respect to the carcass structure 3, the opposite halves 18a, 18b of the shaping drum 18 are moved close to each other in an axial direction, simultaneously with admission of fluid into the carcass ply or plies 10, so as to give the carcass structure 3 a toroidal conformation. The resulting radial expansion of the carcass ply 10 leads the same to adhere against the inner surface of the belt structure 4, retained by the second transfer member 20.

As an alternative to the above statements, application of the tread band 5 can be subsequent to the shaping step causing union between the belt structure 4 and the carcass structure 3, by means of an extruder or another feeding unit operating at the shaping drum 18. In this case, in the same manner as previously illustrated, the tread band 5 can be provided to be obtained through spiralling of at least one, preferably continuous, elongated element of elastomer material, i.e. by winding said elongated element supplied from said extruder, into substantially circumferential coils.

Winding takes place at a radially external position to the belt structure 4 associated with the carcass structure 3 shaped into a toroidal conformation on said shaping drum 18. While the shaping drum 18 is maintained in rotation, a controlled movement of the feeding unit and/or of the shaping drum 18 itself, causes distribution of the coils in a manner adapted to give the tread band 5 the desired final configuration.

In a preferred solution, application of the sidewalls 6 too can be carried out through spiralling as above illustrated with reference to manufacture of the tread band 5, by an extruder or other suitable device operating close to the primary drum 14, before or after application of the carcass ply 10, or close to the shaping drum 18 used to carry out said shaping step, before or after transfer of the carcass structure 3 onto the shaping drum itself. In accordance with a preferential solution, the sidewalls 6.can be directly formed on the carcass structure 3 after said shaping step.

In accordance with the present invention, apparatus 1 comprises devices 21 designed to form the annular reinforcing inserts 11 on at least one service drum 22 placed in the vicinity of the building station 16. In this way, preparation of the annular reinforcing inserts 11 on the service drum 22 can be advantageously executed simultaneously with formation and/or assembling of other components of the carcass structure 3 on the primary drum 14.

The service drum 22 is rotatably supported in cantilevered fashion by a bed 23 carrying the actuator members (not shown) that, in case of need, drive the service drum 22 in rotation around a geometric axis X-X thereof.

The service drum 22 can be advantageously divided into radially expandable circumferential sectors and optionally coated with an elastic sheath providing a continuous circumferentially external surface on which the annular reinforcing inserts 11 are made.

In accordance with an embodying example of the invention, the annular reinforcing inserts 11 can be applied on the service drum 22 in the form of semifinished products, already structured and sized to their final configuration.

Alternatively, each annular reinforcing insert 11 can be made through spiralling, i.e. by winding up at least one continuous elongated element of elastomer material in the form of substantially circumferential coils disposed consecutively close to each other on the service drum 22.

The continuous elongated element can be advantageously fed from at least one extrusion die 24 or other suitable feeding unit directly operating on the service drum 22. Winding takes place at a radially external position to the service drum 22 maintained in rotation, while a controlled axial movement of the feeding unit 24 and/or the service drum itself causes the coils disposed in axial side by side and/or radially superposed relationship, to be distributed in such a manner as to give the annular reinforcing insert 11 the desired final conformation.

Transfer devices generally denoted at 25 pick up the annular reinforcing inserts 11 obtained on the service drum 22 to transfer them onto the primary drum 14, before or after application of liner 12 and preferably before application of the carcass ply 10.

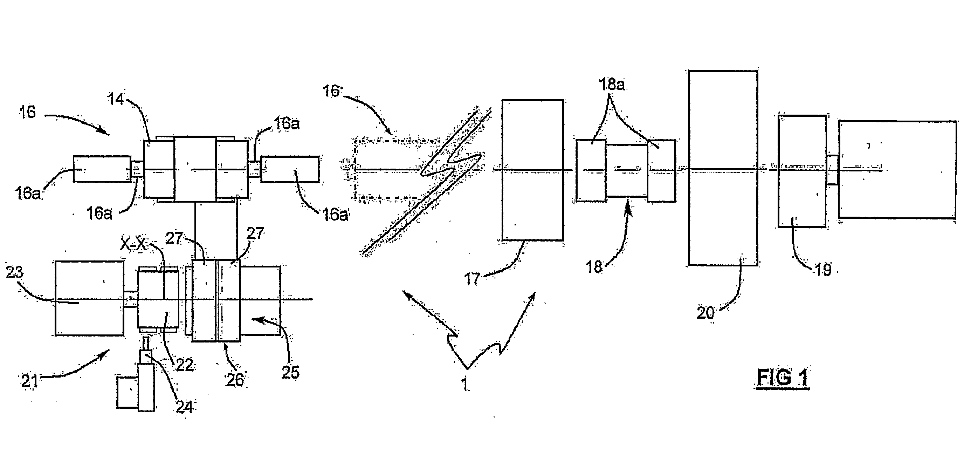

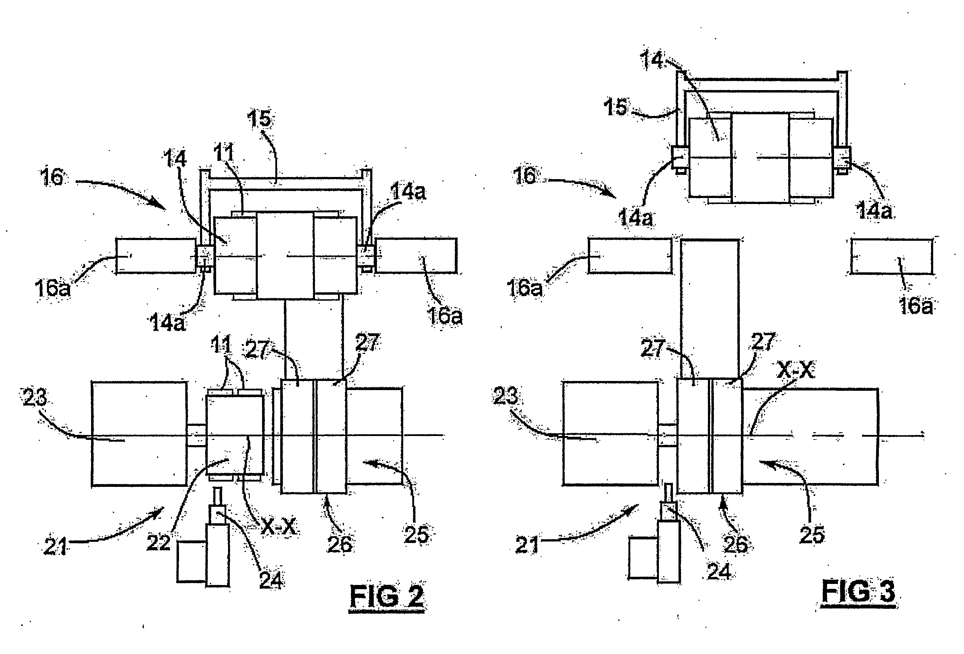

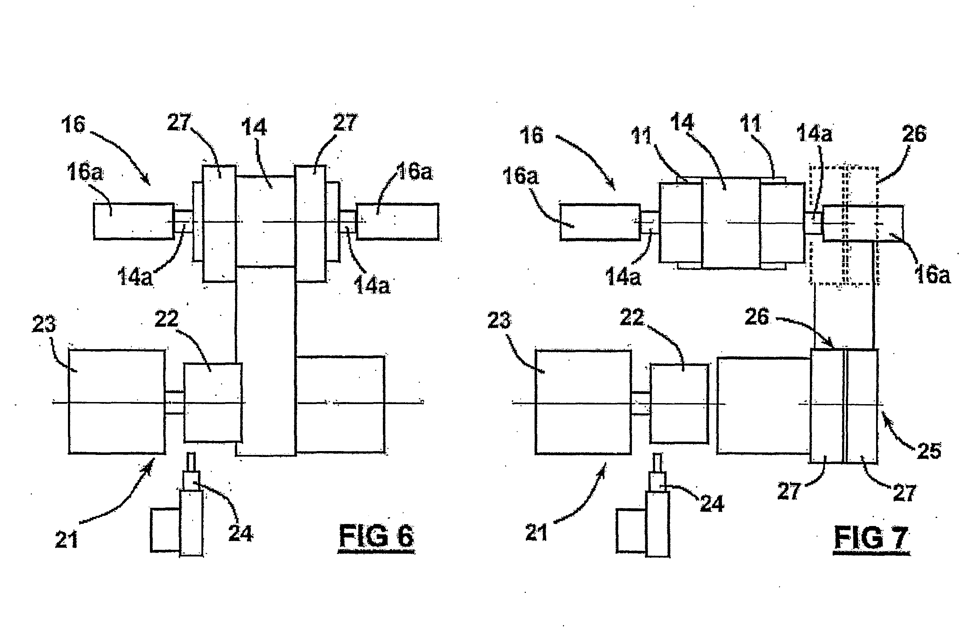

These transfer devices 25 comprise at least one annular transfer member 26, movable between a grip position at which, as shown by way of example in Fig. 3, it is located around the service drum 22 to pick up the annular reinforcing inserts 11, and a laying position at which it is disposed around the primary drum 14, as shown in Fig. 6.

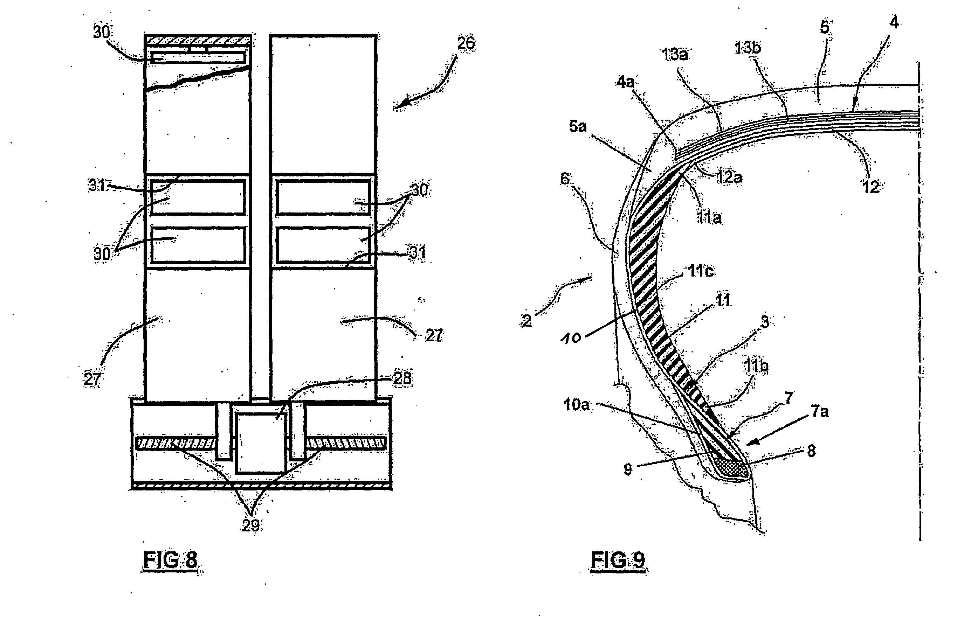

As better viewed from Fig. 8, the annular transfer member 26 can advantageously comprise a first and a second half 27 that are disposed mutually close in an axial direction and are movable away from and close to each other upon command of at least one axial-movement actuator 28 operating on two lead screw nuts 29 having respectively opposite threads.

Associated with each of the halves 27 of the annular transfer member 26 are grip elements 30 movable in a centripetal direction relative to the annular transfer member to retain the annular reinforcing.inserts 11. In the embodiment shown, the grip elements 30 are represented by circumferentially distributed plate-like elements that are radially movable inwardly of the annular transfer member 26. In a possible alternative embodiment the grip elements of each half 27 may comprise at least one annular chamber circumferentially extending along a radially inner wall of the annular transfer element 26 and expandable radially inwardly, following admission of fluid under pressure thereinto.

The annular transfer member 26 can be mounted on an arrangement of orthogonal guides 31 allowing movement of same in a first direction that is substantially parallel to the geometric rotation axis X-X of the service drum 22 and in a second movement direction that is perpendicular to said geometric rotation axis X-X.

Shown in Fig. 2 is an operating step in which the annular transfer member 26 remains in a rest position axially in alignment with and at some distance from the service drum 22, to allow formation of the annular reinforcing inserts 11 through the extrusion die 24. During this step, a primary drum 14 on which at least the annular reinforcing inserts 11 and possibly other elements provided for manufacture of the carcass structure 3 have been previously transferred, is about to be removed from the building station 16 upon the action of the movement member 15.

The annular reinforcing inserts 11 can be advantageously obtained on the service drum 22 where they are disposed axially close to each other so as to allow the structure to be simplified and the axial bulkiness of the drum to be reduced.

When manufacture of the annular reinforcing inserts 11 has been completed, the annular transfer member is axially translated along the first movement direction, so as to bring each of the halves 27 thereof to a coaxial centred position around one of the annular reinforcing inserts 11, as shown in Fig. 3.

Then a centripetal translation of the grip elements 30 engaging the respective annular reinforcing inserts 11 is operated. Inserts 11 disengaged from the auxiliary drum 22 following a radial contraction of the circumferential sectors forming said drum, are definitively removed from the drum itself by a new axial movement of the annular transfer member 26, away from bed 23.

The thrust exerted by the grip members submits the annular reinforcing inserts 11 to the action of centripetal forces for radial containing, which forces are circumferentially distributed and suitably controlled and give rise to an advantageous belting effect capable of eliminating risks of deformation of the inserts themselves due to collapsing. Also used can be needles, suction cups or other grip elements that may further increase the effect of making positioning of the annular reinforcing inserts 11 steadier on the circumferential sectors themselves.

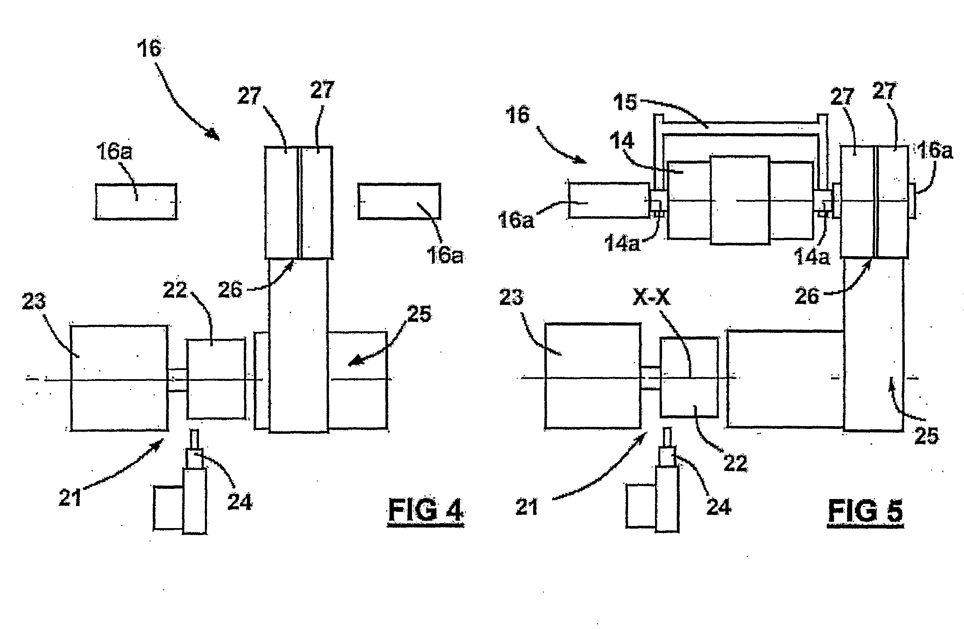

As shown in Fig. 4, the annular transfer member 26 is then radially translated along the second movement direction, to be inserted into the space confined between the mandrels 16a of the work or building station 16, said transfer member being released after the primary drum 14 used in the preceding work cycle has moved away.

By a new axial movement, the annular transfer member 26 and the annular reinforcing inserts 11 engaged therewith are disposed around one of the support elements 16a designed to engage a new primary drum 14 that is subsequently brought to the building station 16 by the movement member 15, as shown in Fig. 5.

Once engagement of the primary drum 14 in the building station 16 is over, the annular transfer member 26 carries out a new axial movement to bring the annular reinforcing inserts 11 onto the drum itself. During this step axial moving away from each other of halves 27 is operated and, as a result, of the annular reinforcing inserts 11 so as to position them at a mutual axial distance suitable for engagement on the primary drum 14, as shown in Fig. 6.

Engagement of the reinforcing inserts 11 on the primary drum 14 takes place following a radial expansion of said drum and subsequent deactivation of the grip elements 30.

In a work station previously passed through by the primary drum 14 or in the building station 16 itself, liner 12 may have been already applied around the drum surface and in this case the reinforcing inserts 11 are applied externally of said liner 12, each at a diametrical recess defined on the primary drum 14. Thus the annular reinforcing inserts 11 will be enclosed between liner 12 and the carcass ply 10 applied on the primary drum 14 in a subsequent work step.

Alternatively, the annular reinforcing inserts 11 can be directly applied to the outer surface of the primary drum 14, and application of liner 12 will take place in an immediately subsequent step. In this case, after the subsequent application of the carcass ply 10, liner 12 can appear partly interposed between the annular reinforcing inserts 11 and the carcass ply itself. Alternatively, liner 12 can have a relatively reduced axial extension, so that the end flaps 12a of the same lend themselves to join the axially inner edges of the annular reinforcing inserts 11 that, following the shaping step, will form the radially external edges 11a close to the edges 4a of the belt structure 4.

When engagement of the annular reinforcing inserts on the primary drum 14 is over, the annular transfer member 26 is axially translated and brought around the support element 14a to allow access to drum 14 of possible members intended for application of liner 12 (if not yet applied), and for laying of the carcass ply 10 and the annular anchoring structures 7, the latter being placed at the axially external edges of the annular reinforcing inserts 11.

It may be also provided that the annular transfer member 26 should have a curvilinear extension interrupted by a radial access opening 31 that can be passed through by the support element 16a. Thus disengagement of the annular transfer member 26 from the building station 16 can take place by a radial movement of said transfer member as diagrammatically shown in Fig. 7, without removal of the primary drum 14 being required.

Formation of the annular reinforcing inserts 11 on the service drum 22 separated from the primary drum 14 advantageously allows balancing of the required times for the operations aiming at obtaining building of the tyre, that are to be carried out respectively in the work stations designed for assembling of the carcass structure 3, at the auxiliary drum 19 and at the possible shaping drum.

As compared with the known art, in fact the time required for application of the annular reinforcing inserts 11 is taken away from the working operations to be carried out on the primary drum 14. Therefore important advantages in terms of productivity of apparatus 1 are achieved.

In addition, more care can be dedicated to manufacture of the reinforcing inserts 11 without impairing the productivity of the whole installation. In particular, the annular reinforcing inserts 11 can be advantageously obtained through spiralling of a continuous elongated element, thereby eliminating any geometric and structural imprecision caused by end-to-end junctions that are necessary when the inserts are obtained from semifinished products in the form of a strip.

In addition, making the annular reinforcing inserts 11 directly on the service drum through spiralling allows the geometric and dimensional features of the inserts themselves to be made suitable for the typology of the tyre being manufactured and/or for any other requirement, without encountering the problems connected with production control of semi-finished products.

It is finally to be pointed out that the invention can be also put into practice by making suitable modifications to already existing apparatus for manufacturing tyres without necessarily requiring a new design and construction of the whole apparatus.

## Claims

1. A method of manufacturing a run-flat tyre for vehicle wheels, comprising the steps of:
- preparing a carcass structure (3) on a primary drum (14), which carcass structure (3) comprises at least one pair of annular reinforcing inserts (11) of elastomer material axially spaced apart from each other, at least one carcass ply (10) circumferentially associated with said annular reinforcing inserts (11) and at least one pair of annular anchoring structures (7) associated with said at least one carcass ply (10);
- shaping the carcass structure (3) into a toroidal configuration;
- associating a belt structure (4) comprising at least one belt layer (13a, 13b), with the carcass structure (3);
wherein preparation of the carcass structure (3) comprises the steps of:
- forming the annular reinforcing inserts (11) on at least one service drum (22);
transferring the annular reinforcing inserts (11) from the service drum (22) to the primary drum (14), before application of the carcass ply (10).

2. A method as claimed in claim 1, wherein each reinforcing insert (11) is formed through winding of at least one continuous elongated element of elastomer material to form coils disposed consecutively close to each other on the service drum (22).

3. A method as claimed in claim 1, wherein preparation of the carcass structure (3) further comprises the step of applying said annular anchoring structures (7) to the carcass ply (10), each of said structures (7) being positioned at an axially external edge (11b) of one of said annular reinforcing inserts (11).

4. A method as claimed in claim 1, wherein following the shaping step, each of the annular reinforcing inserts (11) reaches a position at which an axially inner edge (11a) thereof is brought close to a side edge (4a) of the belt structure (4).

5. A method as claimed in claim 1, wherein preparation of the carcass structure (3) comprises application of at least one liner (12) on the primary drum (14), before disposing a carcass ply (10) around the annular reinforcing inserts (11).

6. A method as claimed in claim 5, wherein the end flaps (12a) of the liner (12) are each joined to an axially inner edge (11a) of the reinforcing inserts (11).

7. A method as claimed in claim 1, further comprising a step of carrying out a mutual axial movement of the annular reinforcing inserts concurrently with the step of transferring the inserts onto the primary drum (14).

8. A method as claimed in claim 7, wherein the annular reinforcing inserts (11) are formed on the service drum (22) at mutually close positions to be then moved apart from each other following the step of mutual axial movement.

9. A method as claimed in claim 1, wherein the annular reinforcing inserts (11) are submitted to centripetal forces for radial containing, which forces are circumferentially distributed during transfer of said inserts onto the primary drum (14).

10. A method as claimed in claim 1, further comprising the step of engaging the primary drum (14) between engagement devices (16a) projecting in coaxial relationship therefrom.

11. A method as claimed in claim 10, wherein transfer of the annular reinforcing inserts (11) onto the primary drum (14) comprises the steps of:
- engaging the annular reinforcing inserts (11) with at least one transfer device (25);
- disposing the annular reinforcing inserts (11) around at least one of said engagement devices (16a) before engaging the primary drum (14) with the engagement devices (16a) themselves;
- axially moving the transfer device (25) to position the annular inserts around the primary drum (14) in engagement with the engagement devices (16a);
- axially moving the transfer device (25) to disengage it from the primary drum (14) carrying the annular reinforcing inserts (11) and position it around one of the engagement devices (16a).

12. A method as claimed in claim 11, further comprising the step of radially moving the transfer device (25) to disengage it from the engagement device (16a) of the primary drum (14).

13. A method as claimed in claim 1, further comprising the step of applying a tread band (5) around the belt structure (4) by winding at least one continuous elongated element of elastomer material into coils disposed consecutively close to each other on the belt structure (4).

14. A method as claimed in claim 13, wherein application of the tread band (5) is carried out before transfer of the belt structure (4) onto the carcass structure (3).

15. A method as claimed in claim 13, wherein application of the tread band (5) is carried out after said shaping step.

16. A method as claimed in claim 1, further comprising the step of forming a pair of sidewalls (6) by winding at least one continuous elongated element of elastomer material into coils disposed consecutively close to each other.

17. A method as claimed in claim 16, wherein the sidewalls (6) are formed on the primary drum (14), before application of the carcass ply (10).

18. A method as claimed in claim 16, wherein the sidewalls (6) are formed on the primary drum (14) after application of the carcass ply (10).

19. A method as claimed in claim 16, wherein the sidewalls (6) are formed on a shaping drum (18) used for carrying out said shaping step, before transfer of the carcass structure (3) onto the shaping drum (18).

20. A method as claimed in claim 16, wherein the sidewalls (6) are formed on a shaping drum (18) used for carrying out said shaping step, after transfer of the carcass structure (3) onto the shaping drum (18).

21. A method as claimed in claim 16, wherein the sidewalls (6) are formed on the carcass structure (3) after said shaping step.

22. A method as claimed in claim 1, further comprising the steps of:
- assembling said belt structure (4) on an auxiliary drum.(19);
- transferring the belt structure (4) to a coaxial centred position with respect to the carcass structure (3).

23. An apparatus for manufacturing a run-flat tyre for vehicle wheels, comprising:
- a primary drum (14) set to support a carcass structure (3) comprising at least one pair of annular reinforcing inserts (11) of elastomer material axially spaced apart from each other, at least one carcass ply (10) circumferentially associated with said annular reinforcing inserts (11) and at least one pair of annular anchoring structures (7) associated with said at least one carcass ply (10);
- shaping devices (18) to give the carcass structure (3) a toroidal configuration,
further comprising at least one service drum (22);
- devices (24) designed to form the annular reinforcing inserts (11) on the service drum (22); and
- transfer devices (25) to carry the annular reinforcing inserts (11) from the service drum (22) to the primary drum (14).

24. An apparatus as claimed in claim 23, wherein the devices designed to form the annular reinforcing inserts (11) comprise at least one feeding unit (24) to supply a continuous elongated element of elastomer material.

25. An apparatus as claimed in claim 24, wherein said feeding unit (24) comprises at least one extrusion die.

26. An apparatus as claimed in claim 24, wherein the service drum (22) is drivable in rotation to wind up the continuous elongated element so as to form coils disposed consecutively close to each other, the feeding unit (24) being axially movable relative to the service drum (22) to distribute the coils in axial side by side and radially superposed relationship.

27. An apparatus as claimed in claim 23, wherein on the primary drum (14) there are operating devices designed to fit said annular anchoring structures (7) on the carcass ply (10), by positioning each of them at an axially external edge (11b) of one of said annular reinforcing inserts (11).

28. An apparatus as claimed in claim 23, wherein on the primary drum (14) there are operating devices designed to apply at least one liner (12) and operating devices designed to apply said carcass ply (10) around said liner (12).

29. An apparatus as claimed in claim 28, wherein the transfer devices (25) of the annular reinforcing inserts (11) comprise:
at least one annular transfer member (26) movable between a grip position and a laying position;
- grip elements (30) movable in a centripetal direction with respect to the annular transfer member (26) to retain the annular reinforcing inserts (11).

30. An apparatus as claimed in claim 29, wherein said grip elements (30) comprise a plurality of movable plate-like elements, circumferentially distributed on the annular transfer member (26).

31. An apparatus as claimed in claim 29, wherein said grip elements (30) comprise at least one expandable annular chamber circumferentially extending along a radially inner wall of the annular transfer member (26).

32. An apparatus as claimed in claim 29, wherein said annular transfer member (26) comprises a first and a second portion (27) disposed axially close to each other, movable close to and away from each other and each of them carrying respective grip members (30) to engage one of the annular reinforcing inserts (11).

33. An apparatus as claimed in claim 29, wherein said annular transfer member (26) is movable in a first movement direction substantially parallel to a geometric rotation axis (X-X) of the service drum (22) and a second movement direction substantially perpendicular to said geometric rotation axis (X-X).

34. An apparatus as claimed in claim 29, wherein said annular transfer member (26) has an interrupted curvilinear extension so as to define an access opening (31) to be passed through by an engagement device (16a) projecting from the primary drum (14) in coaxial relationship.

35. An apparatus as claimed in claim 23, further comprising devices for application of a tread band (5) including at least one feeding unit to supply a continuous elongated element of elastomer material, so as to form the tread band (5) by winding said continuous elongated element into coils disposed consecutively close to each other on the belt structure (4).

36. An apparatus as claimed in claim 35, wherein said devices for application of the tread band (5) operate in the vicinity of an auxiliary drum (19) set to support said belt structure (4).

37. An apparatus as claimed in claim 35, wherein said devices for application of the tread band (5) operate in the vicinity of the carcass structure (3) shaped into a toroidal configuration.

38. An apparatus as claimed in claim 23, further comprising devices designed to form a pair of sidewalls (6) and including at least one feeding unit to supply a continuous elongated element of elastomer material, so as to form said sidewalls (6) by winding said continuous elongated element into coils disposed consecutively close to each other.

39. An apparatus as claimed in claim 38, wherein said devices designed to form the sidewalls (6) operate in the vicinity of the primary drum (14).

40. An apparatus as claimed in claim 38, wherein said devices designed to form the sidewalls (6) operate in the vicinity of the carcass structure (3) shaped into a toroidal configuration.

41. An apparatus as claimed in claim 23, further comprising:
- an auxiliary drum (19) set to support said belt structure (4);
- at least one transfer member (20) to transfer the belt structure (4) to a coaxial centred position with respect to the carcass structure (3).

## Patentansprüche

1. Verfahren zur Herstellung eines Notlaufreifens für Fahrzeugräder mit den Schritten:
- Herstellen eines Karkassenaufbaus (3) auf einer Haupttrommel (14), wobei der Karkassenaufbau (3) wenigstens ein Paar von ringförmigen Verstärkungseinlagen (11) aus elastomerem Material, die axial voneinander beabstandet sind, wenigstens eine Karkassenlage (10), die am Umfang den ringförmigen Verstärkungseinlagen (11) zugeordnet ist, und wenigstens ein Paar von ringförmigen Verankerungsaufbauten (7) aufweist, die der wenigstens einen Karkassenlage (10) zugeordnet sind;
- Formen des Karkassenaufbaus (3) zu einem Torus und
- Zuordnen eines wenigstens eine Gurtlage (13a, 13b) aufweisenden Gurtaufbaus (4) zu dem Karkassenaufbau (3);
wobei die Herstellung des Karkassenaufbaus (3) die Schritte aufweist:
- Ausbilden der ringförmigen Verstärkungseinlagen (11) auf wenigstens einer Servicetrommel (22) und
- Überführen der ringförmigen Verstärkungseinlagen (11) von der Servicetrommel (22) zu der Haupttrommel (14) vor dem Aufbringen der Karkassenlage (10).

2. Verfahren nach Anspruch 1, bei welchem jede Verstärkungseinlage (11) **dadurch** gebildet wird, dass wenigstens ein fortlaufendes langgestrecktes Element aus elastomerem Material zur Bildung von Windungen gewickelt wird, die aufeinanderfolgend nahe beieinander auf der Servicetrommel (22) angeordnet werden.

3. Verfahren nach Anspruch 1, bei welchem die Herstellung des Karkassenaufbaus (3) weiterhin den Schritt aufweist, die ringförmigen Verankerungsaufbauten (7) an der Karkassenlage (10) anzubringen, wobei jeder der Aufbauten (7) an einem axial äußeren Rand (11b) von einer der ringförmigen Verstärkungseinlagen (11) angeordnet wird.

4. Verfahren nach Anspruch 1, bei welchem nach dem Formungsschritt jede der ringförmigen Verstärkungseinlagen (11) eine Position erreicht, in der ein axial innerer Rand (11a) von ihr nahe an einem Seitenrand (4a) des Gurtaufbaus (4) gebracht ist.

5. Verfahren nach Anspruch 1, bei welchem die Herstellung des Karkassenaufbaus (4) das Aufbringen wenigstens einer Auskleidung (12) auf die Haupttrommel (14) vor dem Anordnen einer Karkassenlage (10) um die ringförmigen Verstärkungseinlagen (11) herum aufweist.

6. Verfahren nach Anspruch 5, bei welchem die Endlaschen (12a) der Auskleidung (12) jeweils mit einem axial inneren Rand (11a) der Verstärkungseinlagen (11) verbunden werden.

7. Verfahren nach Anspruch 1, welches weiterhin einen Schritt aufweist, eine gegenseitige Axialbewegung der ringförmigen Verstärkungseinlagen gleichzeitig mit dem Schritt des Überführens der Einlagen auf die Haupttrommel (14) auszuführen.

8. Verfahren nach Anspruch 7, bei welchem die ringförmigen Verstärkungseinlagen (11) auf der Servicetrommel (22) in zueinander nahen Positionen ausgebildet werden, um dann nach dem Schritt der gegenseitigen Axialbewegung voneinander weg bewegt zu werden.

9. Verfahren nach Anspruch 1, bei welchem die ringförmigen Verstärkungseinlagen (11) für ein radiales Einschließen Zentripetalkräften ausgesetzt werden, die während der Überführung der Einlagen auf die Haupttrommel (14) am Umfang verteilt werden.

10. Verfahren nach Anspruch 1, welches weiterhin den Schritt aufweist, die Haupttrommel (14) zwischen Eingriffseinrichtungen (16a), die in koaxialer Beziehung davon vorstehen, in Eingriff zu bringen.

11. Verfahren nach Anspruch 10, bei welchem die Überführung der ringförmigen Verstärkungseinlagen (11) auf die Haupttrommel (14) die Schritte aufweist:
- Bringen der ringförmigen Verstärkungseinlagen (11) in Eingriff mit wenigstens einer Überführungseinrichtung (25),
- Anordnen der ringförmigen Verstärkungseinlagen (11) um wenigstens eine der Eingriffseinrichtungen (16a) herum, bevor die Haupttrommel (14) mit den Eingriffseinrichtungen (16a) in Eingriff gebracht wird,
- axiales Bewegen der Überführungseinrichtung (25), um die ringförmigen Einlagen um die Haupttrommel (14) herum in Eingriff mit den Eingriffseinrichtungen (16a) zu positionieren, und
- axiales Bewegen der Überführungseinrichtung (25) für das Lösen des Eingriffs mit der Haupttrommel (14), die die ringförmigen Verstärkungseinlagen (11) trägt, und für ihr Positionieren um eine der Eingriffseinrichtungen (16a) herum.

12. Verfahren nach Anspruch 11, welches weiterhin den Schritt aufweist, die Überführungseinrichtung (25) radial zu bewegen, um den Eingriff mit der Eingriffseinrichtung (16a) der Haupttrommel (14) zu lösen.

13. Verfahren nach Anspruch 1, welches weiterhin den Schritt aufweist, ein Laufflächenband (5) um den Gurtaufbau (4) herum aufzubringen, indem wenigstens ein fortlaufendes langgestrecktes Element aus elastomerem Material in Windungen gewickelt wird, die aufeinanderfolgend nahe beieinander auf dem Gurtaufbau (4) angeordnet werden.

14. Verfahren nach Anspruch 13, bei welchem das Aufbringen des Laufflächenbandes (5) vor der Überführung des Gurtaufbaus (4) auf den Karkassenaufbau (3) ausgeführt wird.

15. Verfahren nach Anspruch 13, bei welchem das Aufbringen des Laufflächenbandes (5) nach dem Formungsschritt ausgeführt wird.

16. Verfahren nach Anspruch 1, welches weiterhin den Schritt aufweist, ein Paar von Seitenwänden (6) **dadurch** auszubilden, dass wenigstens ein fortlaufendes langgestrecktes Element aus elastomerem Material in Windungen gewickelt wird, die aufeinanderfolgend nahe beieinander angeordnet werden.

17. Verfahren nach Anspruch 16, bei welchem die Seitenwände (6) auf der Haupttrommel (14) vor dem Aufbringen der Karkassenlage (10) ausgebildet werden.

18. Verfahren nach Anspruch 16, bei welchem die Seitenwände (6) auf der Haupttrommel (14) nach dem Aufbringen der Karkassenlage (10) ausgebildet werden.

19. Verfahren nach Anspruch 16, bei welchem die Seitenwände (6) auf einer Formtrommel (18), die zur Ausführung des Formungsschritts verwendet wird, vor der Überführung des Karkassenaufbaus (3) auf die Formtrommel (18) ausgebildet werden.

20. Verfahren nach Anspruch 16, bei welchem die Seitenwände (6) auf einer Formtrommel (18), die zum Ausführen des Formungsschritts verwendet wird, nach der Überführung des Karkassenaufbaus (3) auf die Formtrommel (18) ausgebildet werden.

21. Verfahren nach Anspruch 16, bei welchem die Seitenwände (6) auf dem Karkassenaufbau (3) nach dem Formungsschritt ausgebildet werden.

22. Verfahren nach Anspruch 1, welches weiterhin die Schritte aufweist:
- Zusammenfügen des Gurtaufbaus (4) auf einer Hilfstrommel (19) und
- Überführen des Gurtaufbaus (4) in eine koaxial zentrierte Position bezüglich des Karkassenaufbaus (3).

23. Vorrichtung zur Herstellung eines Notlaufreifens für Fahrzeugräder
- mit einer Haupttrommel (14) für das Tragen eines Karkassenaufbaus (3), der wenigstens ein Paar von ringförmigen Verstärkungseinlagen (11) aus elastomerem Material, die axial voneinander beabstandet sind, wenigstens eine Karkassenlage (10), die am Umfang den ringförmigen Verstärkungseinlagen (11) zugeordnet ist, und wenigstens ein Paar von ringförmigen Verankerungsaufbauten (7) aufweist, die der wenigstens einen Karkassenlage (10) zugeordnet sind;
- mit Formeinrichtungen (18), um dem Karkassenaufbau (3) eine Torusform zu geben, und
- weiterhin mit wenigstens einer Servicetrommel (22),
- mit Einrichtungen (24), die zur Bildung der ringförmigen Verstärkungseinlagen (11) auf der Servicetrommel (22) ausgelegt sind, und
- mit Überführungseinrichtungen (25) zum Transportieren der ringförmigen Verstärkungseinlagen (11) von der Servicetrommel (22) zur Haupttrommel (14).

24. Vorrichtung nach Anspruch 23, bei welcher die Einrichtungen, die zur Bildung der ringförmigen Verstärkungseinlagen (11) ausgelegt sind, wenigstens eine Zuführeinheit (24) zum Zuführen eines fortlaufenden langgestreckten Elements aus elastomerem Material aufweisen.

25. Vorrichtung nach Anspruch 24, bei welcher die Zuführeinheit (24) wenigstens ein Extrudermundstück aufweist.

26. Vorrichtung nach Anspruch 24, bei welcher die Servicetrommel (22) in Drehung versetzbar ist, um das fortlaufende langgestreckte Element so aufzuwickeln, dass Windungen gebildet werden, die aufeinanderfolgend nahe beieinander angeordnet sind, wobei die Zuführeinheit (28) bezüglich der Servicetrommel (22) axial bewegbar ist, um die Windungen in einer axialen Beziehung Seite an Seite und radial aufeinandergelegt zu verteilen.

27. Vorrichtung nach Anspruch 23, bei welcher an der Haupttrommel (14) Funktionseinrichtungen vorhanden sind, die so ausgelegt sind, dass sie die ringförmigen Verankerungsaufbauten (7) auf der Karkassenlage (10) **dadurch** aufpassen, dass jede von ihnen an einem axial äußeren Rand (11b) von einer der ringförmigen Verstärkungseinlagen (11) angeordnet wird.

28. Vorrichtung nach Anspruch 23, bei welcher an der Haupttrommel (14) Funktionseinrichtungen, die für das Aufbringen wenigstens einer Auskleidung (12) ausgelegt sind, und Funktionseinrichtungen vorhanden sind, die für das Aufbringen der Karkassenlage (10) um die Auskleidung (12) herum ausgelegt sind.

29. Vorrichtung nach Anspruch 28, bei welcher die Überführungseinrichtungen (25) der ringförmigen Verstärkungseinlagen (11)
- wenigstens ein ringförmiges Überführungselement (26), das zwischen einer Greifposition und einer Ablegeposition bewegbar ist, und
- Greifelemente (30) aufweist, die in eine Zentripetalrichtung bezüglich des ringförmigen Überführungselements (26) bewegbar sind, um die ringförmigen Verstärkungseinlagen (11) zu halten.

30. Vorrichtung nach Anspruch 29, bei welcher die Greifelemente (30) eine Vielzahl von beweglichen plattenförmigen Elementen aufweisen, die am Umfang auf dem ringförmigen Überführungselement (26) verteilt sind.

31. Vorrichtung nach Anspruch 29, bei welcher die Greifelemente (30) wenigstens eine expandierbare Ringkammer aufweisen, die sich am Umfang längs einer radial inneren Wand des ringförmigen Überführungselements (26) erstreckt.

32. Vorrichtung nach Anspruch 29, bei welcher das ringförmige Überführungselement (26) einen ersten und einen zweiten Teil (27) aufweist, die axial nahe beieinander angeordnet sind, nahe aufeinander zu und voneinander weg bewegbar sind und von denen jedes jeweils Greifelemente (30) für das Greifen einer der ringförmigen Verstärkungseinlagen (11) trägt.

33. Vorrichtung nach Anspruch 29, bei welcher das ringförmige Überführungselement (26) in einer ersten Bewegungsrichtung im Wesentlichen parallel zu einer geometrischen Drehachse (X-X) der Servicetrommel (22) und in einer zweiten Bewegungsrichtung im Wesentlichen senkrecht zu der geometrischen Drehachse (X-X) bewegbar ist.

34. Vorrichtung nach Anspruch 29, bei welcher das ringförmige Überführungselement (26) eine unterbrochene gekrümmte Erstreckung hat, so dass eine Zugangsöffnung (31) für den Durchgang einer Eingriffseinrichtung (16a) gebildet wird, die aus der Haupttrommel (14) in einer koaxialen Beziehung vorsteht.

35. Vorrichtung nach Anspruch 23, welche weiterhin Einrichtungen zum Aufbringen eines Laufflächenbandes (5) aufweist, zu denen wenigstens eine Zuführeinheit zum Zuführen eines fortlaufenden langgestreckten Elements aus elastomerem Material gehört, so dass das Laufflächenband (5) durch Wickeln des fortlaufenden langgestreckten Elements in Windungen gebildet wird, die aufeinanderfolgend nahe beieinander auf dem Gurtaufbau (4) angeordnet sind.

36. Vorrichtung nach Anspruch 35, bei welcher die Einrichtungen zum Aufbringen des Laufflächenbandes (5) ihre Funktion in der Nähe einer Hilfstrommel (19) zum Tragen des Gurtaufbaus (4) ausführen.

37. Vorrichtung nach Anspruch 35, bei welcher die Einrichtungen zum Aufbringen des Laufflächenbandes (5) ihre Funktion in der Nähe des Karkassenaufbaus (3) ausführen, der in eine Torusform gebracht ist.

38. Vorrichtung nach Anspruch 23, welche weiterhin Einrichtungen aufweist, die so ausgelegt sind, dass ein Paar von Seitenwänden (6) gebildet wird, und die wenigstens eine Zuführeinheit zum Zuführen eines fortlaufenden langgestreckten Elements aus elastomerem Material aufweisen, so dass die Seitenwände (6) **dadurch** gebildet werden, dass das fortlaufende langgestreckte Element in Windungen gewickelt wird, die aufeinanderfolgend nahe beieinander angeordnet sind.

39. Vorrichtung nach Anspruch 38, bei welcher die Einrichtungen, die zur Ausbildung der Seitenwände (6) ausgelegt sind, ihre Funktion in der Nähe der Haupttrommel (14) ausführen.

40. Vorrichtung nach Anspruch 38, bei welcher die Einrichtungen, die zur Ausbildung der Seitenwände (6) ausgelegt sind, ihre Funktion in der Nähe des Karkassenaufbaus (3) ausführen, der in eine Torusform gebracht ist.

41. Vorrichtung nach Anspruch 23, welche weiterhin
- eine Hilfstrommel (19) zum Tragen des Gurtaufbaus (4) und
- wenigstens ein Überführungselement (20) zum Überführen des Gurtaufbaus (4) in eine koaxial zentrierte Position bezüglich des Karkassenaufbaus (3) aufweist.

## Revendications

1. Procédé de fabrication d'un pneu de roulage à plat pour roues de véhicule, comprenant les étapes consistant à :
- préparer une structure de carcasse (3) sur un tambour primaire (14), ladite structure de carcasse (3) comprenant au moins une paire d'inserts de renforcement annulaires (11) en matériau élastomère espacés l'un de l'autre dans le sens axial, au moins une nappe de carcasse (10) associée de manière circonférentielle auxdits inserts de renforcement annulaires (11) et au moins une paire de structures d'ancrage annulaires (7) associées à ladite au moins une nappe de carcasse (10) ;
- donner à la structure de carcasse (3) une configuration toroïdale ;
- associer à la structure de carcasse (3) une structure de ceinture (4) comprenant au moins une couche de ceinture (13a, 13b) ;
dans lequel la préparation de la structure de carcasse (3) comprend les étapes consistant à :
- former les inserts de renforcement annulaires (11) sur au moins un tambour de service (22) ;
transférer les inserts de renforcement annulaires (11) du tambour de service (22) au tambour primaire (14), avant application de la nappe de carcasse (10).

2. Procédé selon la revendication 1, dans lequel chaque insert de renforcement (11) est formé par enroulement d'au moins un élément allongé continu en matériau élastomère pour former des spires disposées tour à tour, les unes à côté des autres, sur le tambour de service (22).

3. Procédé selon la revendication 1, dans lequel la préparation de la structure de carcasse (3) comprend en outre l'étape consistant à appliquer lesdites structures d'ancrage annulaires (7) sur la nappe de carcasse (10), chacune desdites structures (7) étant positionnée au niveau d'un bord axialement extérieur (11b) de l'un desdits inserts de renforcement annulaires (11).

4. Procédé selon la revendication 1, dans lequel, suite à l'étape de mise en forme, chacun des inserts de renforcement annulaires (11) atteint une position dans laquelle un bord axialement intérieur (11a) de celui-ci est mis à proximité d'un bord latéral (4a) de la structure de ceinture (4).

5. Procédé selon la revendication 1, dans lequel la préparation de la structure de carcasse (3) comprend l'application d'au moins une doublure (12) sur le tambour primaire (14), avant de disposer une nappe de carcasse (10) autour des inserts de renforcement annulaires (11).

6. Procédé selon la revendication 5, dans lequel les rabats d'extrémité (12a) de la doublure (12) sont reliés chacun à un bord axialement intérieur (11a) des inserts de renforcement (11).

7. Procédé selon la revendication 1, comprenant en outre une étape consistant à mettre en oeuvre un mouvement axial mutuel des inserts de renforcement annulaires simultanément à l'étape de transfert des inserts sur le tambour primaire (14).

8. Procédé selon la revendication 7, dans lequel les inserts de renforcement annulaires (11) sont formés sur le tambour de service (22) en des positions mutuellement proches pour être ensuite éloignés l'un de l'autre après l'étape de mouvement axial mutuel.

9. Procédé selon la revendication 1, dans lequel les inserts de renforcement annulaires (11) sont soumis à des forces centripètes pour la retenue radiale, lesdites forces étant réparties dans le sens de la circonférence pendant le transfert desdits inserts sur le tambour primaire (14).

10. Procédé selon la revendication 1, comprenant en outre l'étape consistant à engager le tambour primaire (14) entre des dispositifs d'engagement (16a) faisant saillie en relation coaxiale depuis celui-ci.

11. Procédé selon la revendication 10, dans lequel le transfert des inserts de renforcement annulaires (11) sur le tambour primaire (14) comprend les étapes consistant à :
- engager les inserts de renforcement annulaires (11) avec au moins un dispositif de transfert (25) ;
- disposer les inserts de renforcement annulaires (11) autour d'au moins l'un des dispositifs d'engagement (16a) avant d'engager le tambour primaire (14) avec les dispositifs d'engagement (16a) eux-mêmes ;
- déplacer axialement le dispositif de transfert (25) pour positionner les inserts annulaires autour du tambour primaire (14) en engagement avec les dispositifs d'engagement (16a) ;
- déplacer axialement le dispositif de transfert (25) pour le dégager du tambour primaire (14) portant les inserts de renforcement annulaires (11) et le positionner autour de l'un des dispositifs d'engagement (16a).

12. Procédé selon la revendication 11, comprenant en outre l'étape consistant à déplacer radialement le dispositif de transfert (25) pour le dégager du dispositif d'engagement (16a) du tambour primaire (14).

13. Procédé selon la revendication 1, comprenant en outre l'étape consistant à appliquer une bande de roulement (5) autour de la structure de ceinture (4) en enroulant au moins un élément allongé continu en matériau élastomère en spires disposées tour à tour près les unes des autres sur la structure de ceinture (4).

14. Procédé selon la revendication 13, dans lequel l'application de la bande de roulement (5) est effectuée avant le transfert de la structure de ceinture (4) sur la structure de carcasse (3).

15. Procédé selon la revendication 13, dans lequel l'application de la bande de roulement (5) est effectuée après ladite étape de mise en forme.

16. Procédé selon la revendication 1, comprenant en outre l'étape consistant à former une paire de flancs (6) en enroulant au moins un élément allongé continu en matériau élastomère en spires disposées tour à tour près les unes des autres.

17. Procédé selon la revendication 16, dans lequel les flancs (6) sont formés sur le tambour primaire (14), avant l'application de la nappe de carcasse (10).

18. Procédé selon la revendication 16, dans lequel les flancs (6) sont formés sur le tambour primaire (14) après l'application de la nappe de carcasse (10).

19. Procédé selon la revendication 16, dans lequel les flancs (6) sont formés sur un tambour de façonnage (18) utilisé pour exécuter ladite étape de mise en forme, avant le transfert de la structure de carcasse (3) sur le tambour de façonnage (18).

20. Procédé selon la revendication 16, dans lequel les flancs (6) sont formés sur un tambour de façonnage (18) utilisé pour exécuter ladite étape de mise en forme, après le transfert de la structure de carcasse (3) sur le tambour de façonnage (18).

21. Procédé selon la revendication 16, dans lequel les flancs (6) sont formés sur la structure de carcasse (3) après ladite étape de mise en forme.

22. Procédé selon la revendication 1, comprenant en outre les étapes consistant à :
- assembler ladite structure de ceinture (4) sur un tambour auxiliaire (19) ;
- transférer la structure de ceinture (4) dans une position coaxiale centrée par rapport à la structure de carcasse (3).

23. Dispositif pour la fabrication d'un pneu de roulage à plat pour roues de véhicule, comprenant :
- un tambour primaire (14) prévu pour supporter une structure de carcasse (3) comprenant au moins une paire d'inserts de renforcement annulaires (11) en matériau élastomère espacés l'un de l'autre dans le sens axial, au moins une nappe de carcasse (10) associée de manière circonférentielle auxdits inserts de renforcement annulaires (11) et au moins une paire de structures d'ancrage annulaires (7) associées à ladite au moins une nappe de carcasse (10) ;
- des appareils de façonnage (18) pour donner à la structure de carcasse (3) une configuration toroïdale, comprenant de plus au moins un tambour de service (22) ;
- des appareils (24) conçus pour former les inserts de renforcement annulaires (11) sur le tambour de service (22) ; et
- des appareils de transfert (25) pour porter les inserts de renforcement annulaires (11) du tambour de service (22) au tambour primaire (14).

24. Dispositif selon la revendication 23, dans lequel les appareils conçus pour former les inserts de renforcement annulaires (11) comprennent au moins une unité d'alimentation (24) pour amener un élément allongé continu en matériau élastomère.

25. Dispositif selon la revendication 24, dans lequel ladite unité d'alimentation (24) comprend au moins une filière d'extrusion.

26. Dispositif selon la revendication 24, dans lequel le tambour de service (22) peut être entraîné en rotation pour enrouler l'élément allongé continu afin de former des spires disposées tour à tour, les unes à côté des autres, l'unité d'alimentation (24) étant mobile axialement par rapport au tambour de service (22) pour répartir les spires axialement côte à côte et superposées radialement.

27. Dispositif selon la revendication 23, dans lequel, sur le tambour primaire (14), se trouvent des appareils d'actionnement conçus pour monter lesdites structures d'ancrage annulaires (7) sur la nappe de carcasse (10), en positionnant chacune d'entre elles au niveau d'un bord axialement extérieur (11b) de l'un desdits inserts de renforcement annulaires (11).

28. Dispositif selon la revendication 23, dans lequel, sur le tambour primaire (14), se trouvent des appareils d'actionnement conçus pour appliquer au moins une doublure (12) et des appareils d'actionnement conçus pour appliquer ladite nappe de carcasse (10) autour de ladite doublure (12).

29. Dispositif selon la revendication 28, dans lequel les appareils de transfert (25) des inserts de renforcement annulaires (11) comprennent :
- au moins un élément de transfert annulaire (26) mobile entre une position de préhension et une position de pose ;
- des éléments de préhension (30) mobiles dans une direction centripète par rapport à l'élément de transfert annulaire (26) pour retenir les inserts de renforcement annulaires (11).

30. Dispositif selon la revendication 29, dans lequel lesdits éléments de préhension (30) comprennent une pluralité d'éléments mobiles en forme de plaques (30), répartis selon la circonférence sur l'élément de transfert annulaire (26).

31. Dispositif selon la revendication 29, dans lequel lesdits éléments de préhension (30) comprennent au moins une chambre annulaire expansible s'étendant circonférentiellement le long d'une paroi radialement intérieure de l'élément de transfert annulaire (26).

32. Dispositif selon la revendication 29, dans lequel ledit élément de transfert annulaire (26) comprend une première et une deuxième partie (27) disposées axialement près l'une de l'autre, pouvant s'éloigner et se rapprocher l'une de l'autre et portant chacune des éléments de préhension (30) respectifs pour engager l'un des inserts de renforcement annulaires (11).

33. Dispositif selon la revendication 29, dans lequel ledit élément de transfert annulaire (26) est mobile dans une première direction de mouvement sensiblement parallèle à un axe de rotation géométrique (X-X) du tambour de service (22) et une deuxième direction de mouvement sensiblement perpendiculaire audit axe de rotation géométrique (X-X).

34. Dispositif selon la revendication 29, dans lequel ledit élément de transfert annulaire (26) a une extension curviligne interrompue pour définir une ouverture d'accès (31) permettant le passage d'un dispositif d'engagement (16a) faisant saillie depuis le tambour primaire (14) en relation coaxiale.

35. Dispositif selon la revendication 23, comprenant en outre des appareils pour l'application d'une bande de roulement (5) incluant au moins une unité d'alimentation pour amener un élément allongé continu en matériau élastomère, afin de former la bande de roulement (5) en enroulant ledit élément allongé continu en spires disposées les unes après les autres, près les unes des autres sur la structure de ceinture (4).

36. Dispositif selon la revendication 35, dans lequel lesdits appareils pour l'application de la bande de roulement (5) agissent au voisinage d'un tambour auxiliaire (19) prévu pour supporter ladite structure de ceinture (4).

37. Dispositif selon la revendication 35, dans lequel lesdits appareils pour l'application de la bande de roulement (5) agissent au voisinage de la structure de carcasse (3) mise sous la forme d'une configuration toroïdale.

38. Dispositif selon la revendication 23, comprenant en outre des appareils conçus pour former une paire de flancs (6) et incluant au moins une unité d'alimentation pour amener un élément allongé continu en matériau élastomère, afin de former lesdits flancs (6) en enroulant ledit élément allongé continu en spires disposées les unes après les autres, près les unes des autres.

39. Dispositif selon la revendication 38, dans lequel lesdits appareils conçus pour former les flancs (6) agissent au voisinage du tambour primaire (14).

40. Dispositif selon la revendication 38, dans lequel lesdits appareils conçus pour former les flancs (6) agissent au voisinage de la structure de carcasse (3) mise en forme de configuration toroïdale.

41. Dispositif selon la revendication 23, comprenant de plus :
- un tambour auxiliaire (19) prévu pour supporter ladite structure de ceinture (4) ;
- au moins un élément de transfert (20) pour transférer la structure de ceinture (4) dans une position coaxiale centrée par rapport à la structure de carcasse (3).
